# EUROPÄISCHE PATENTSCHRIFT

(11) **EP 3 246 562 B1**
(45) Veröffentlichungstag und Bekanntmachung des Hinweises auf die Patenterteilung: **13.02.2019**
(21) Anmeldenummer: 16170064.6
(22) Anmeldetag: 18.05.2016
(51) Int. Cl.: F03D 80/30, F03D 1/06

(54) **BLITZREZEPTOR FÜR EIN WINDENERGIEANLAGENROTORBLATT**
LIGHTNING RECEPTOR FOR A WIND TURBINE ROTOR BLADE
RÉCEPTEUR DE FOUDRE POUR UNE PALE DE ROTOR D'ÉOLIENNES

(43) Veröffentlichungstag der Anmeldung: 22.11.2017
(73) Patentinhaber: Nordex Energy GmbH, 22419 Hamburg (DE)
(72) Erfinder: Ohlerich, Nick, 18055 Rostock (DE); Kremer, Jochen, 22299 Hamburg (DE)
(74) Vertreter: Hauck Patentanwaltspartnerschaft mbB

(56) Entgegenhaltungen:
- EP-A1- 2 021 628
- EP-A1- 2 365 218
- DE-A1-102015 200 370
- KR-A- 20100 115 139
- US-A1- 2016 090 963

## Beschreibung

Die Erfindung betrifft einen Blitzrezeptor für ein Windenergieanlagenrotorblatt, der einteilig in einem Gießverfahren hergestellt ist. Windenergieanlagen sind wegen ihrer großen Bauhöhe besonders häufig von einem Blitzschlag betroffen. Am häufigsten schlägt der Blitz im Bereich der Spitze eines gerade nach oben weisenden Rotorblatts ein. Um eine Beschädigung oder gar Zerstörung des Rotorblatts durch den Blitzschlag zu verhindern, ist es bekannt, im Bereich der Rotorblattspitze einen Blitzrezeptor anzuordnen und mit einem Blitzschutzleiter zu verbinden. Der Strom eines in den Blitzrezeptor einschlagenden Blitzes wird dann über den Blitzschutzleiter zur Rotorblattwurzel, von dort in die Nabe, über die Gondel und den Turm der Windenergieanlage zur Erde abgeleitet.

Dennoch kommt es in der Praxis immer wieder zu Beschädigungen der Rotorblätter durch Blitzschläge. Beispielsweise können infolge elektromagnetischer Induktion Überschläge zwischen unterschiedlichen, elektrisch leitfähigen Strukturen eines Rotorblatts auftreten. Ebenfalls beobachtet worden ist, dass ein Blitz nicht unmittelbar in einen hierfür vorgesehenen Blitzrezeptor einschlägt, sondern am Rand des Blitzrezeptors oder in einem Abstand davon und von dort einen anderen Weg zum Blitzschutzleiter oder einer sonstigen leitfähigen Struktur findet. Dabei können beispielsweise faserverstärkte Kunststoffmaterialien des Rotorblatts in Mitleidenschaft gezogen werden, bis hin zu einer irreparablen Beschädigung des Rotorblatts.

Aus der Druckschrift WO 2013/007267 A1 ist ein Windenergieanlagenrotorblatt mit einem metallischen Blitzrezeptor an der Blattspitze bekannt geworden. Zusätzlich sollen Kupfergitter oder -folien an einer Oberfläche des Rotorblatts angebracht werden.

Aus der Druckschrift DE 10 2005 051 537 A1 ist ein Verfahren zur nachträglichen Einrichtung eines Blitzschutzsystems in einem Rotorblatt bekannt geworden. Dazu soll eine Rotorblattspitze abgetrennt und durch einen metallischen Blitzrezeptor ersetzt werden. In einigen Ausführungsbeispielen weist der Blitzrezeptor Fortsätze an der Profilnasenkante oder an der Profilendkante auf, die mit außen am Windenergieanlagenrotorblatt angeordneten Blitzschutzleitern verbunden werden sollen. Aus der Druckschrift EP 2 712 472 B2 ist ein Windenergieanlagenrotorblatt mit einer Blitzschutzeinrichtung bekannt geworden. Diese weist einen mehrteiligen Blitzrezeptor auf, der mit Metallfolien oder -gittern kombiniert wird.

Aus der Druckschrift KR 20100115139 A ist ein Windenergieanlagenrotorblatt mit einem Blitzrezeptor bekannt.

Aus der Druckschrift EP 1 668 246 B1 ist ein mehrteilig aufgebauter Blitzrezeptor für ein Windenergieanlagenrotorblatt bekannt geworden. Der Blitzrezeptor wird mit Hilfe mehrerer Stangen aus einem Kunststoffmaterial montiert.

Aus der Druckschrift WO 2010/100283 A1 ist ein Windenergieanlagenrotorblatt bekannt geworden, dessen Blattspitze von einem Kunststoffteil gebildet ist, in das ein Blitzrezeptor und ein Blitzschutzleiter eingearbeitet sind. Zusätzliche elektrisch leitfähige Schichten sind an der Außenseite des Rotorblatts angeordnet und von dem Blitzschutzleiter isoliert.

Aus der Druckschrift EP 2 267 280 A2 ist bekannt geworden, an der Spitze eines Windenergieanlagenrotorblatts eine flächige Schicht eines leitfähigen oder halbleitenden Materials anzuordnen, das im Falle eines Blitzschlags eine feldhomogenisierende Wirkung ausüben soll.

Aus der Druckschrift EP 2 532 893 A1 ist ein Blitzrezeptor für ein Windenergieanlagenrotorblatt bekannt geworden, der aus Metall besteht und eine Blattspitze des Rotorblatts bildet. Der Blitzrezeptor weist einen von der Blattspitze abgewandten Befestigungsabschnitt auf, der in dem Rotorblatt befestigt wird. Zwischen dem Rotorblatt und dem Blitzrezeptor wird ein Keramikbauteil eingesetzt, das einen Teil des Befestigungsabschnitts umgibt und wegen seiner Hitzebeständigkeit Beschädigungen am Rotorblatt bei Blitzschlägen in den Blitzrezeptor vermeiden soll.

Aus der Druckschrift DE 10 2015 200 370 A1 ist ein Windenergieanlagenrotorblatt bekannt geworden, dessen Spitze von einem metallischen Blitzrezeptor gebildet ist. In einem Ausführungsbeispiel weist der Blitzrezeptor einen entlang einer Profilendkante des Rotorblatts verlaufenden Fortsatz auf.

Davon ausgehend ist es die Aufgabe der Erfindung, einen Blitzrezeptor für ein Windenergieanlagenrotorblatt zur Verfügung zu stellen, der eine Beschädigung des Rotorblatts bei Blitzschlägen wirksam verhindert, einfach zu fertigen und zu montieren und ggf. auszutauschen ist.

Diese Aufgabe wird gelöst durch den Blitzrezeptor mit den Merkmalen des Anspruchs 1. Vorteilhafte Ausgestaltungen sind in den Unteransprüchen angegeben.

Der Blitzrezeptor ist für ein Windenergieanlagenrotorblatt bestimmt, einteilig in einem Gießverfahren hergestellt und weist eine Rezeptorspitze, eine Rezeptorsaugseite, eine Rezeptordruckseite, eine Rezeptornasenkante und eine Rezeptorendkante sowie einen Befestigungsabschnitt mit zwei einander gegenüberliegenden Klebeflächen auf, die von Aussparungen in der Rezeptordruckseite und in der Rezeptorsaugseite gebildet sind, wobei ein rezeptornasenkantenseitiger Schenkel und ein rezeptorendkantenseitiger Schenkel in Richtung von der Rezeptorspitze weg über den Befestigungsabschnitt überstehen.

Der Befestigungsabschnitt befindet sich in einem Abstand von der Rezeptorspitze und dient zur Befestigung des Blitzrezeptors an dem Windenergieanlagenrotorblatt. Bei bestimmungsgemäßer Montage des Blitzrezeptors an einem Windenergieanlagenrotorblatt ist der Blitzrezeptor an der Blattspitze des Rotorblatts angeordnet. Die Rezeptorspitze bildet die Blattspitze des Rotorblatts. Die Rezeptorsaugseite bildet einen Abschnitt der Saugseite des Rotorblatts, die Rezeptordruckseite bildet einen Abschnitt der Druckseite des Rotorblatts, die Rezeptornasenkante bildet einen Abschnitt der Nasenkante des Rotorblatts und die Rezeptorendkante bildet einen Abschnitt der Endkante des Rotorblatts. Ein rezeptornasenkantenseitiger Schenkel und ein rezeptorendkantenseitiger Schenkel begrenzen den Befestigungsabschnitt und stehen in Richtung von der Rezeptorspitze weg über den Befestigungsabschnitt über, d.h. sie erstrecken sich bei an dem Rotorblatt montiertem Blitzrezeptor am weitesten zur Blattwurzel des Rotorblatts hin. Der Befestigungsabschnitt endet in größerem Abstand von der Blattwurzel. Der rezeptornasenkantenseitige Schenkel und der rezeptorendkantenseitige Schenkel werden nach der Montage in das Rotorblatt nicht vom Laminat bedeckt.

Der Blitzrezeptor kann einfach und kostengünstig in einem Gießverfahren hergestellt werden, beispielsweise aus Aluminium, Kupfer, einem sonstigen Metall oder einer Legierung. Die Formgebung des Blitzrezeptors kann in diesem Herstellungsverfahren einfach und exakt vorgegeben werden, einschließlich der Rezeptorend- und Nasenkante. Eine optimale elektrische Leitfähigkeit ist automatisch gesichert, auch im Übergangsbereich zwischen Rezeptorend- oder Rezeptornasenkante und Rezeptorspitze und zum Befestigungsabschnitt, an dem bevorzugt ein Blitzschutzleiter befestigt werden kann.

Die Erfindung beruht auf der durch Hochspannungsversuche gefestigten Erkenntnis, dass der exakte Ort eines Blitzschlags unter realistischen Betriebsbedingungen kaum vorhersagbar ist. Zu unbestimmt sind die Einflüsse von Feuchtigkeit und Niederschlag sowie Luftströmungen und -turbulenzen. Es hat sich jedoch gezeigt, dass der sogenannte Polaritätseffekt von Bedeutung ist. So kommt es bei den vergleichsweise seltenen, jedoch besonders energiereichen Positivblitzen, bei denen eine das Rotorblatt umgebende Raumladungswolke positiv und das Rotorblatt negativ geladen ist, auf. In diesem Fall befinden sich in einer Umgebung der negativ geladenen Blattspitze durch Ionisation freie Ladungsträger. Die negativ geladenen Elektronen weisen eine relativ hohe Beweglichkeit auf und entfernen sich relativ schnell von der Blattspitze, wenn sie von umgebenen, positiv geladenen Flächen/Bereichen angezogen werden. Die weniger beweglichen, positiv geladenen Ionen bleiben zurück und werden von der negativ geladenen Blattspitze angezogen. Die dadurch entstehende, positive Raumladungszone um die negativ geladene Blattspitze herum bewirkt eine Abschirmung der Blattspitze, durch die Blitzeinschläge abseits der Blattspitze wahrscheinlicher werden. In Verbindung mit den besonders hohen Energien der Positivblitze kommt es durch diesen Effekt vermehrt zu schweren Beschädigungen.

Bei der Erfindung wird solchen Beschädigungen dadurch entgegengewirkt, dass ein rezeptornasenkantenseitiger Schenkel und ein rezeptorendkantenseitiger Schenkel den im Inneren des Rotorblatts angeordneten Befestigungsabschnitt des Blitzrezeptors abschirmen. Das Einschlagen von Positivblitzen in den Befestigungsabschnitt wird vermieden, da selbst bei der durch den erläuterten Raumladungseffekt abgeschirmten Rezeptorspitze ein Blitzeinschlag in die Rezeptornasenkante oder Rezeptorendkante wahrscheinlicher ist.

Ein weiterer Vorteil des erfindungsgemäßen Blitzrezeptors ist die einfache und sichere Befestigung an dem Windenergieanlagenrotorblatt mit Hilfe der beiden einander gegenüberliegenden Klebeflächen. Diese sind von Aussparungen in der Rezeptordruckseite und der Rezeptorsaugseite gebildet. In diese Aussparungen greifen komplementär ausgebildete Befestigungsabschnitte des Windenergieanlagenrotorblatts, die gegebenenfalls erst bei Montage des Blitzrezeptors im Laminierverfahren von einem faserverstärkten Kunststoffmaterial ausgebildet werden, ein. Auf diese Weise wird mit Klebeflächen, deren Ausbildung keine besonders blitzschlaggefährdeten Kanten in einer Umgebung der Klebeflächen erfordert, ein sicherer Halt erreicht. Falls einmal ein Austausch des Blitzrezeptors erforderlich werden sollte, können die genannten Laminatabschnitte einfach entfernt und neu aufgebaut werden.

Bei ordnungsgemäßer Montage des Blitzrezeptors an dem Windenergieanlagenrotorblatt sind die Aussparungen nach dem Verkleben der Klebeflächen mit einem Werkstoff des Rotorblatts ausgefüllt, sodass sich die von der Rezeptordruckseite und Rezeptorsaugseite gebildeten Abschnitte der Druck- bzw. Saugseite des Rotorblatts im Wesentlichen übergangslos an die von dem Werkstoff des Rotorblatts gebildeten Druck- und Saugseitenabschnitte anschließen.

In einer Ausgestaltung sind die Klebeflächen relativ zu der Rezeptordruckseite bzw. relativ zu der Rezeptorsaugseite nach innen versetzt angeordnet. Insbesondere befinden sie sich in einem gleichmäßigen Abstand von einer gedachten Fortsetzung der Rezeptordruckseite und Rezeptorsaugseite bzw., bei ordnungsgemäß an einem Windenergieanlagenrotorblatt montiertem Blitzrezeptor, in gleichmäßigem Abstand von Druck- bzw. Saugseite des Rotorblatts.

In einer Ausgestaltung sind die Aussparungen rechteck- oder trapezförmig. Diese Angabe bezieht sich insbesondere auf eine Ansicht in Richtung auf die Rezeptordruckseite bzw. auf die Rezeptorsaugseite. Insbesondere eine trapezförmige Ausbildung der Aussparungen ermöglicht eine sichere Befestigung, wobei in Längsrichtung des Blitzrezeptors mehr oder weniger gleichmäßig breite Abschnitte der Rezeptordruckseite und Rezeptorsaugseite verbleiben. Davon unabhängig können die Aussparungen im Querschnitt ebenfalls rechteck- oder trapezförmig ausgebildet sein.

In einer Ausgestaltung weisen die Aussparungen eine gleichmäßige Tiefe im Bereich von 1 mm bis 10 mm auf. Sie können dadurch mit einem Faserverbundmaterial gefüllt werden, welches aus einer oder mehreren Lagen eines Fasermaterials und einer Kunststoffmatrix besteht.

In einer Ausgestaltung ist in einer Klebefläche mindestens eine Bohrung angeordnet. Es kann sich um eine Sackbohrung handeln oder um eine Durchgangsbohrung, die von der Aussparung in der Rezeptordruckseite bis zur Aussparung in der Rezeptorsaugseite durchgeht. Durch das Vorsehen derartiger Bohrungen wird eine sichere Verklebung begünstigt.

In einer Ausgestaltung weist der Befestigungsabschnitt Anschlussmittel für einen Blitzschutzleiter auf. Dabei kann es sich insbesondere um eine Gewindebohrung handeln, in die ein Befestigungsmittel für den Blitzschutzleiter eingeschraubt wird, oder um eine Aufnahme für den Blitzschutzleiter selbst oder ein Befestigungsabschnitt davon.

In einer Ausgestaltung sind die Anschlussmittel an einer Stirnfläche des Befestigungsabschnitts angeordnet, die näher an der Rezeptorspitze angeordnet ist als ein von der Rezeptorspitze entferntes Ende des Befestigungsabschnitts. Die Stirnfläche kann im Wesentlichen senkrecht zur Rezeptorsaugseite und -druckseite ausgerichtet sein. Bei der genannten Anordnung der Anschlussmittel wird eine besonders wirksame Abschirmung auch des Anschlussbereichs des Blitzschutzleiters durch die rezeptorendkantenseitigen und rezeptornasenkantenseitigen Schenkel der Rezeptorspitze erzielt. Dadurch ist es möglich, den Blitzschutzleiter mittels einer kraftschlüssigen Verbindung (Verschraubung) an der Rezeptorspitze zu befestigen. Bei herkömmlichen Rezeptorspitzen wird der Blitzschutzleiter mit einer stoffschlüssigen Verbindung an der Rezeptorspitze angeschlossen, da diese kantenfrei hergestellt werden kann. Eine Schraubverbindung ist in Hinblick auf Reparaturen am Blitzschutzsystem vorteilhafter. Diese Art der Verbindung ist allerdings aufgrund der vorhandenen Kanten für Blitze sehr viel attraktiver und müsste mit einer entsprechenden Isolationsschicht umgeben werden. Entsprechend der vorliegenden Erfindung ist die Verwendung einer Schraubverbindung problemlos möglich, da die Verbindungsstelle durch die rezeptorendkantenseitigen und rezeptornasenkantenseitigen Schenkel der Rezeptorspitze vor Blitzeinschlägen abgeschirmt wird.

In einer Ausgestaltung weist die Stirnfläche eine konkave Krümmung auf. Durch diese Maßnahme wird der Anschlussbereich für den Blitzschutzleiter besonders wirksam in den abgeschirmten Bereich des Befestigungsabschnittes integriert. Insbesondere bei Wahl eines relativ großen Krümmungsradius, beispielsweise im Bereich von 5 cm bis 20 cm, wird die Ausbildung von für einen Blitzschlag attraktiven Kanten vermieden.

In einer Ausgestaltung ist der Blitzrezeptor mit einem Windenergieanlagenrotorblatt kombiniert, an dem er in der bereits erläuterten Weise ordnungsgemäß befestigt ist, sodass die Rezeptorspitze eine Blattspitze, die Rezeptorsaugseite einen Abschnitt einer Saugseite, die Rezeptordruckseite einen Abschnitt einer Druckseite, die Rezeptornasenkante einen Abschnitt einer Profilnasenkante und die Rezeptorendkante einen Abschnitt einer Profilendkante des Windenergieanlagenrotorblatts bilden. Das Windenergieanlagenrotorblatt kann weiterhin einen Blitzschutzleiter aufweisen, der insbesondere im Inneren des Rotorblatts angeordnet ist. Der Blitzschutzleiter ist mit dem Blitzrezeptor verbunden, insbesondere mit Hilfe der erläuterten Anschlussmittel am Befestigungsabschnitt.

Nachfolgend wird die Erfindung anhand eines in zwei Figuren gezeigten Ausführungsbeispiels näher erläutert. Es zeigen:
- Fig. 1: ein Windenergieanlagenrotorblatt mit einem erfindungsgemäßen Blitzrezeptor in einer vereinfachten perspektivischen Darstellung, und
- Fig. 2: einen erfindungsgemäßen Blitzrezeptor in einer perspektivischen Ansicht.

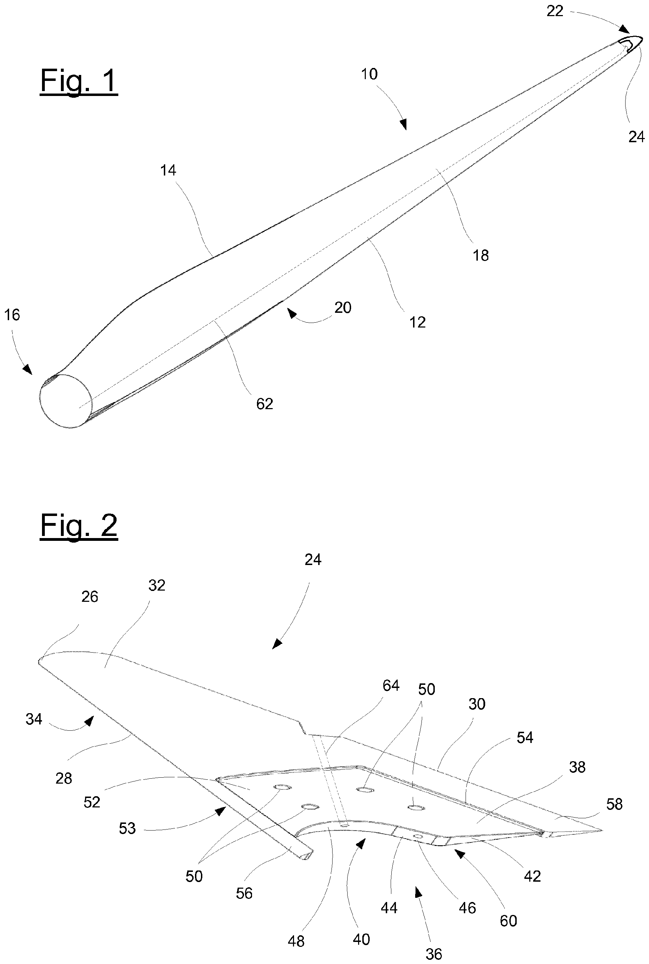

Das Windenergieanlagenrotorblatt 10 der Figur 1 weist eine Profilnasenkante 12, eine Profilendkante 14, eine Blattwurzel 16, eine Saugseite 18 und eine Druckseite 20 auf. Die Blattspitze 22 wird von einem Blitzrezeptor 24 gebildet, an den ein im Inneren des Windenergieanlagenrotorblatts 10 bis hin zur Blattwurzel 16 verlaufender Blitzschutzleiter 62 angeschlossen ist.

Einzelheiten des Blitzrezeptors 24 sind besser in der Figur 2 erkennbar. Der dort gezeigte Blitzrezeptor 24 ist einteilig in einem Gießverfahren, im Beispiel aus Aluminium, hergestellt. Er weist eine Rezeptorspitze 26, eine Rezeptornasenkante 28, eine Rezeptorendkante 30, eine Rezeptorsaugseite 32 und eine Rezeptordruckseite 34 auf, die in der Figur 2 vom Betrachter abgewandt ist. Man erkennt, dass der Blitzrezeptor 24 im Querschnitt ein aerodynamisches Profil aufweist.

An dem dem Betrachter zugewandten, von der Rezeptorspitze 26 entfernten Ende hat der Blitzrezeptor 24 einen Befestigungsabschnitt 36, der zwei einander gegenüberliegende Klebeflächen 38, 40 aufweist. Die Klebefläche 38 ist von einer trapezförmigen Aussparung in der Rezeptorsaugseite 32 gebildet. Die in der Figur 2 vom Betrachter abgewandte Klebefläche 40 ist ebenfalls trapezförmig. Sie ist von einer Aussparung in der Rezeptordruckseite 34 gebildet.

Der Befestigungsabschnitt 36 weist an seinem von der Rezeptorspitze 26 abgewandten Ende eine Stirnfläche 60 auf, die im Wesentlichen senkrecht zur Rezeptorsaugseite 32 und Rezeptordruckseite 34 ausgerichtet ist. Ein erster Abschnitt 42 dieser Stirnfläche verläuft in Richtung des aerodynamischen Profils. An ihn schließt sich ein schräg zu einer Längsrichtung des Blitzrezeptors 24 angeordneter, zweiter Abschnitt 44 an, in dem eine Gewindebohrung 46 zum Anschließen des Blitzschutzleiters 26 ausgebildet ist. In die Gewindebohrung kann ein Gewindebolzen eingesetzt werden, an welchem der Blitzschutzleiter über einen Kabelschuh und eine Mutter befestigt wird (nicht dargestellt). An den zweiten Abschnitt 44 der Stirnfläche 60 schließt sich ein konkav gekrümmter, dritter Abschnitt 48 der Stirnfläche an, der in einem Bogen bis zur Rezeptornasenkante 28 führt. In diesem Bereich befindet sich die Eintrittsöffnung einer Entwässerungsbohrung 64, die durch die Rezeptorspitze 26 hindurch verläuft. Die Eintrittsöffnung der Entwässerungsbohrung ist so im Abschnitt 48 angeordnet, dass sie sich an der tiefsten Stelle der konkaven Krümmung befindet, wenn das Rotorblatt mit der Blattspitze nach unten weist, d.h., wenn es sich in der sogenannten 6-Uhr-Position befindet. Dadurch wird sichergestellt, dass im Rotorblatt befindliches Kondenswasser in die Entwässerungsbohrung 64 läuft.

Die Aussparungen 52, 53 auf der Rezeptordruckseite 34 und der Rezeptorsaugseite 32, deren Bodenflächen die Klebeflächen 38, 40 bilden, sind trapezförmig und weisen eine um drei Seiten des Trapezes umlaufende, einige Millimeter hohe Kante 54 auf. Mit den Klebeflächen 38, 40 wird ein entsprechend ausgeformtes Ende des Rotorblatts 10 verklebt. In den Klebeflächen 38, 40 sind vier Bohrungen 50 ausgebildet. Die Bohrungen 50 können als Sackbohrung sowohl auf der Rezeptorsaugseite 32 als auch auf der Rezeptordruckseite 34 ausgebildet sein. Alternativ können sie als Durchgangsbohrungen zwischen Rezeptorsaugseite 32 und Rezeptordruckseite 34 ausgeführt sein. Die Bohrungen 50 dienen der Aufnahme von überschüssigem Klebstoff bei der Montage des Blitzrezeptors 24 an das Windenergieanlagenrotorblatt 10.

Die Rezeptorspitze 24 weist an ihrem dem Betrachter zugewandten Ende einen nasenkantenseitigen Schenkel 56 und einen endkantenseitigen Schenkel 58 auf, welche an den Befestigungsabschnitt 36 grenzen und welche in Richtung von der Rezeptorspitze 26 weg über den Befestigungsabschnitt 36 überstehen. Die beiden Schenkel 56, 58 werden nach der Montage der Rezeptorspitze 24 an das Rotorblatt 10 nicht vom Laminat des Rotorblattes bedeckt.

### Liste der verwendeten Bezugszeichen:

- 10: Windenergieanlagenrotorblatt
- 12: Profilnasenkante
- 14: Profilendkante
- 16: Blattwurzel
- 18: Saugseite
- 20: Druckseite
- 22: Blattspitze
- 24: Blitzrezeptor
- 26: Rezeptorspitze
- 28: Rezeptornasenkante
- 30: Rezeptorendkante
- 32: Rezeptorsaugseite
- 34: Rezeptordruckseite
- 36: Befestigungsabschnitt
- 38: Klebefläche
- 40: Klebefläche
- 42: erster Abschnitt der Stirnfläche 60
- 44: zweiter Abschnitt der Stirnfläche 60
- 46: Gewindebohrung
- 48: dritter Abschnitt der Stirnfläche 60
- 50: Bohrung
- 52: Aussparung
- 53: Aussparung
- 54: Kante
- 56: nasenkantenseitiger Schenkel der Rezeptorspitze 24
- 58: endkantenseitiger Schenkel der Rezeptorspitze 24
- 60: Stirnfläche
- 62: Blitzschutzleiter
- 64: Entwässerungsbohrung

## Patentansprüche

1. Blitzrezeptor (24) für ein Windenergieanlagenrotorblatt, wobei der Blitzrezeptor (24) einteilig in einem Gießverfahren hergestellt ist und eine Rezeptorspitze (26), eine Rezeptorsaugseite (32), eine Rezeptordruckseite (34), eine Rezeptornasenkante (28) und eine Rezeptorendkante (30) aufweist, **gekennzeichnet durch** einen Befestigungsabschnitt (36) mit zwei einander gegenüberliegenden Klebeflächen (38, 40), die von Aussparungen (52) in der Rezeptordruckseite (34) und in der Rezeptorsaugseite (32) gebildet sind, wobei ein rezeptornasenkantenseitiger Schenkel (56) und ein rezeptorendkantenseitiger Schenkel (58) in Richtung von der Rezeptorspitze (26) weg über den Befestigungsabschnitt (36) überstehen.

2. Blitzrezeptor (24) nach Anspruch 1, **dadurch gekennzeichnet, dass** die Klebeflächen (38, 40) relativ zu der Rezeptordruckseite (34) bzw. relativ zu der Rezeptorsaugseite (32) nach innen versetzt angeordnet sind.

3. Blitzrezeptor (24) nach Anspruch 1 oder 2, **dadurch gekennzeichnet, dass** die Aussparungen (52) rechteck- oder trapezförmig sind.

4. Blitzrezeptor (24) nach einem der Ansprüche 1 bis 3, **dadurch gekennzeichnet, dass** die Aussparungen (52) eine gleichmäßige Tiefe im Bereich von 1 mm bis 10 mm aufweisen.

5. Blitzrezeptor (24) nach einem der Ansprüche 1 bis 4, **dadurch gekennzeichnet, dass** in einer Klebefläche (38, 40) mindestens eine Bohrung (50) angeordnet ist.

6. Blitzrezeptor (24) nach einem der Ansprüche 1 bis 5, **dadurch gekennzeichnet, dass** der Befestigungsabschnitt (36) Anschlussmittel für einen Blitzschutzleiter (62) aufweist.

7. Blitzrezeptor (24) nach Anspruch 6, **dadurch gekennzeichnet, dass** die Anschlussmittel an einer Stirnfläche (60) des Befestigungsabschnitts (36) angeordnet sind, die näher an der Rezeptorspitze (26) angeordnet ist, als ein von der Rezeptorspitze (26) entferntes Ende des Befestigungsabschnitts (36).

8. Blitzrezeptor (24) nach Anspruch 7, **dadurch gekennzeichnet, dass** die Stirnfläche (60) eine konkave Krümmung aufweist.

9. Windenergieanlagenrotorblatt (10) mit einem Blitzrezeptor (24) nach einem der Ansprüche 1 bis 8, wobei die Rezeptorspitze (26) eine Blattspitze (22), die Rezeptorsaugseite (32) einen Abschnitt einer Saugseite (18), die Rezeptordruckseite (34) einen Abschnitt einer Druckseite (20), die Rezeptornasenkante (28) einen Abschnitt einer Profilnasenkante (12) und die Rezeptorendkante (30) einen Abschnitt einer Profilendkante (14) des Windenergieanlagenrotorblatts (10) bilden.

## Claims

1. A lightning receptor (24) for a wind turbine rotor blade, the lightning receptor (24) being produced in one part in a casting process and having a receptor tip (26), a receptor suction side (32), a receptor pressure side (34), a receptor leading edge (28) and a receptor trailing edge (30), defined by a fastening portion (36) with two mutually opposite adhesive bonding surfaces (38, 40) which are formed by recesses (52) in the receptor pressure side (34) and in the receptor suction side (32), a receptor-leading-edge-side leg (56) and a receptor-trailing-edge-side leg (58) projecting beyond the fastening portion (36) in a direction away from the receptor tip (26).

2. The lightning receptor (24) as claimed in claim 1, wherein the adhesive bonding surfaces (38, 40) are arranged in an inwardly offset manner relative to the receptor pressure side (34) or relative to the receptor suction side (32).

3. The lightning receptor (24) as claimed in claim 1 or 2, wherein the recesses (52) are rectangular or trapezoidal.

4. The lightning receptor (24) as claimed in one of claims 1 to 3, wherein the recesses (52) have a uniform depth in the range from 1 mm to 10 mm.

5. The lightning receptor (24) as claimed in one of claims 1 to 4, wherein at least one bore (50) is arranged in an adhesive bonding surface (38, 40).

6. The lightning receptor (24) as claimed in one of claims 1 to 5, wherein the fastening portion (36) has connection means for a lightning conductor (62).

7. The lightning receptor (24) as claimed in claim 6, wherein the connection means are arranged on an end face (60) of the fastening portion (36) that is arranged closer to the receptor tip (26) than an end of the fastening portion (36) that is remote from the receptor tip (26).

8. The lightning receptor (24) as claimed in claim 7, wherein the end face (60) has a concave curvature.

9. A wind turbine rotor blade (10) having a lightning receptor (24) as claimed in one of claims 1 to 8, the receptor tip (26) forming a blade tip (22), the receptor suction side (32) forming a portion of a suction side (18), the receptor pressure side (34) forming a portion of a pressure side (20), the receptor leading edge (28) forming a portion of a profile leading edge (12), and the receptor trailing edge (30) forming a portion of a profile trailing edge (14) of the wind turbine rotor blade (10).

## Revendications

1. Récepteur de parafoudre (24) pour une pale de rotor d'éolienne, le récepteur de parafoudre (24) étant réalisé d'une seule pièce à l'aide d'un procédé de moulage et présentant une pointe de récepteur (26), un côté aspiration de récepteur (32), un côté pression de récepteur (34), une arête nasale de récepteur (28) et une arête d'extrémité de récepteur (30), **caractérisé par** une section de fixation (36) avec deux surfaces de collage (38, 40) opposées l'une à l'autre, lesquelles sont formées par des évidements (52) dans le côté pression de récepteur (34) et dans le côté aspiration de récepteur (32), une branche côté arête nasale de récepteur (56) et une branche côté aspiration de récepteur (58) faisant saillie au-delà de la section de fixation (36) dans une direction opposée à la pointe de récepteur (26).

2. Récepteur de parafoudre (24) selon la revendication 1, **caractérisé en ce que** les surfaces de collage (38, 40) sont disposées de façon décalée vers l'intérieur par rapport au côté pression de récepteur (34) ou par rapport au côté aspiration de récepteur (32).

3. Récepteur de parafoudre (24) selon la revendication 1 ou 2, **caractérisé en ce que** les évidements (52) sont de forme rectangulaire ou trapézoïdale.

4. Récepteur de parafoudre (24) selon l'une des revendications 1 à 3, **caractérisé en ce que** les évidements (52) présentent une profondeur homogène de 1 mm à 10 mm.

5. Récepteur de parafoudre (24) selon l'une des revendications 1 à 4, **caractérisé en ce qu'**au moins un alésage (50) est disposé dans une surface de collage (38, 40).

6. Récepteur de parafoudre (24) selon l'une des revendications 1 à 5, **caractérisé en ce que** la section de fixation (36) présente des moyens de raccordement pour un conducteur de parafoudre (62).

7. Récepteur de parafoudre (24) selon la revendication 6, **caractérisé en ce que** les moyens de raccordement sont disposés sur une surface frontale (60) de la section de fixation (36), laquelle est disposée plus près de la pointe de récepteur (26) qu'une extrémité de la section de fixation (36) éloignée de la pointe de récepteur (26).

8. Récepteur de parafoudre (24) selon la revendication 7, **caractérisé en ce que** la surface frontale (60) présente une courbure concave.

9. Pale de rotor d'éolienne (10) avec un récepteur de parafoudre (24) selon l'une des revendications 1 à 8, dans lequel la pointe de récepteur (26) forme une pointe de pale (22), le côté aspiration de récepteur (32) forme une section d'un côté aspiration (18), le côté pression de récepteur (34) forme une section d'un côté pression (20), l'arête nasale de récepteur (28) forme une section d'une arête nasale de profil (12) et l'arête d'extrémité de récepteur (30) forme une section d'une arête d'extrémité de profil (14) de la pale de rotor d'éolienne (10).
